# EUROPÄISCHE PATENTSCHRIFT

(11) **EP 2 348 788 B1**
(45) Veröffentlichungstag und Bekanntmachung des Hinweises auf die Patenterteilung: **22.03.2017**
(21) Anmeldenummer: 11000269.8
(22) Anmeldetag: 14.01.2011
(51) Int. Cl.: H05B 3/48

(54) **Elektrische Heizvorrichtung**
Electric heating device
Dispositif de chauffage électrique

(30) Priorität: 25.01.2010 DE 202010001370 U
(43) Veröffentlichungstag der Anmeldung: 27.07.2011
(73) Patentinhaber: Türk + Hillinger GmbH, D-78532 Tuttlingen (DE)
(72) Erfinder: Schlipf, Andreas, 78532 Tuttlingen (DE)
(74) Vertreter: Westphal, Mussgnug & Partner Patentanwälte mbB

(56) Entgegenhaltungen:
- WO-A2-02/32190
- DE-A1- 2 141 707
- DE-U1-202007 010 865
- US-A- 3 742 761

## Beschreibung

Die Erfindung betrifft eine elektrische Heizvorrichtung mit den Merkmalen des Oberbegriffs des Patentanspruchs 1 und ein Verfahren zur Herstellung einer solchen elektrischen Heizvorrichtung. Derartige Heizvorrichtungen werden beispielsweise zum Beheizen von Werkzeugen, Maschinenteilen und Geräten, insbesondere von Kunststoffspritzdüsen verwendet. Ihre Anwendung ist aber nicht auf diesen Zweck beschränkt; beispielsweise ist es möglich, Fluide durch Durchleitung durch diese Art von Heizvorrichtung auf eine gewünschte Temperatur zu bringen. Alternativ können auch stehende Fluide oder ein Dehnwachs auf eine gewünschte Temperatur gebracht werden.

Besonders populäre Ausführungsformen derartiger Heizvorrichtungen sind solche mit zylindrischer Geometrie.

Die bekannten elektrischen Heizvorrichtungen bestehen in der Regel aus zwei beabstandet voneinander angeordneten Mantelflächen, zwischen denen wenigstens ein Heizleiter isoliert angeordnet ist. Dabei kann es sich um einen Heizleiter in Band- oder Drahtform oder um einen anderen Widerstandsdraht handeln. Im Rahmen dieser Anmeldung wird dabei unter der "inneren Mantelfläche" stets diejenige verstanden, die mit dem zu beheizenden Bauteil in Kontakt steht oder durch das zu beheizende Bauteil selbst gebildet wird; dementsprechend ist die "äußere Mantelfläche" vom zu beheizenden Bauteil abgewandt.

Aus dem Stand der Technik, z.B. der DE 103 33 206 B4, ist es bekannt, den Heizleiter dazu auf einen isolierenden, insbesondere rohrförmigen Wickelkörper oder Träger aufzubringen, der dann zwischen den Grenzflächen angeordnet wird.

Aus der DE 20 2007 010 865 U1 ist eine elektrische Heizvorrichtung mit einem inneren Metallmantel und einem äußeren Metallmantel, die derart relativ zueinander angeordnet sind, dass zwischen dem inneren Metallmantel und dem äußeren Metallmantel ein Raum vorhanden ist und mit mehreren, jeweils auf einem Wicklungsträger angeordneten Heizleitern im Raum zwischen innerem und äußerem Metallmantel bekannt.

Aus der DE 21 41 707 ist eine elektrische Heizpatrone mit Temperaturbegrenzer bekannt, bei welcher der Heizleiter auf einem Keramikelement geführt ist und gemeinsam mit diesem in einer Isoliermasse angeordnet ist, welche insbesondere auch im Bereich zwischen einem inneren Hüllrohr und dem durch das Keramikrohr gebildeten Tragkörper vorhanden ist.

Aus der US 3,742,761 ist ein Flussmessgerät für Flüssigkeiten bekannt, bei dem die Messung des Flüssigkeitsdurchflusses dadurch erfolgt, dass die Flüssigkeit an Windungen eines auf Abstandshaltern angeordneten, beheizten Thermoelements, das zwischen einer inneren und äußeren Mantelfläche aus Metall angeordnet ist, vorbeigeführt wird.

Gleichzeitig ist es allerdings wünschenswert, dass eine möglichst direkte und homogene Übertragung der Heizleistung des Heizleiters auf die innere Grenzfläche erfolgt und dass eine möglichst platzsparende und kompakte Ausgestaltung erreicht wird. Dieses Ziel kann bei Verwendung eines Wickelkörpers oder Trägers nur eingeschränkt realisiert werden, da er einerseits die notwendige mechanische Stabilität aufweisen muss und andererseits hinreichend hohe Fertigungstoleranzen haben muss, um den Einbau des Wickelkörpers oder Trägers in die elektrische Heizvorrichtung trotz Abweichungen seiner Rundheit von der idealen Form, seiner Durchbiegung und etwaigen Durchmesserschwankungen über die Länge des Körpers hinweg zu erlauben. Insbesondere muss darüber hinaus auch sein Innendurchmesser so viel Spiel aufweisen, dass Durchbiegung und Unrundheit der inneren Mantelfläche aufgenommen wird. Es kann zur zumindest lokalen Ausbildung von schmalen Spalten zwischen dem Wickelkörper oder Träger einerseits der inneren Mantelfläche andererseits kommen, die eine gute und homogene Übertragung der Heizleistung verhindern und beim Verdichten des Heizelements zu Inhomogenitäten führen.

Selbst wenn eine Befüllung mit einem Pulver oder Granulat vorgenommen wird, kommt es oft vor, dass Luftpolster verbleiben. Erfolgt dann eine nachträgliche Verdichtung auf einem Passdorn, kann es zum Faltenwurf einer Mantelfläche kommen, was die Heizvorrichtung unbrauchbar macht oder die Wärmeübertragung auf das zu beheizende Objekt verschlechtert.

Aufgabe der Erfindung ist daher das Bereitstellen einer günstig herzustellenden elektrischen Heizvorrichtung mit sehr geringem Querschnitt und hoher Präzision hinsichtlich der Reproduzierbarkeit der Temperaturverteilung.

Diese Aufgabe wird gelöst durch eine elektrische Heizvorrichtung mit den Merkmalen des Patentanspruchs 1. Vorteilhafte Ausgestaltungen der Erfindung sind den jeweiligen Unteransprüchen zu entnehmen.

Die erfindungsgemäße elektrische Heizvorrichtung weist einen inneren Metallmantel und einem äußeren Metallmantel auf, die derart relativ zueinander angeordnet sind, dass zwischen dem inneren Metallmantel und dem äußeren Metallmantel ein Raum vorhanden ist. Dabei ist es insbesondere möglich, dass der innere Metallmantel der elektrischen Heizvorrichtung durch ein zu beheizendes Bauteil, insbesondere eine metallische Oberfläche desselben, gebildet wird.

Ferner weist sie mindestens einen zumindest abschnittsweise im Raum zwischen innerem Metallmantel und äußerem Metallmantel angeordneten Heizleiter auf.

Erfindungswesentlich ist, dass mindestens zwei zwischen dem Heizleiter und dem inneren Metallmantel angeordnete Abstandshalter vorgesehen sind, über die Abschnitte des Heizleiters geführt sind.

Mit einer Führung über einen Abstandshalter ist dabei gemeint, dass der betreffende Abschnitt des Heizleiters auf einem Abschnitt des äußeren Umfangs des Abstandshalters verläuft.

Durch das Verwenden von mindestens zwei separaten Abstandshaltern wird es unnötig, die bei Verwendung eines einzelnen, rohrförmigen Abstandshalters unumgänglichen Fertigungstoleranzen einzuhalten, was eine kompaktere Bauform mit sich bringt. Der Vorteil dieser Anordnung liegt somit darin, dass ein sehr geringer Abstand des Heizleiters vom inneren und/oder äußeren Metallmantel einfach realisiert werden kann, so dass eine elektrische Heizvorrichtung mit sehr geringer Wandstärke realisiert werden kann.

In einer besonders bevorzugten Ausführungsform ist zumindest vor einem Verpressen der elektrischen Heizvorrichtung jeweils zwischen zwei geführten Abschnitten des Heizleiters ein nicht geführter Abschnitt des Heizleiters vorhanden, in dem der Heizleiter nicht über einen der Abstandshalter geführt ist. Das Vorsehen derartiger nicht geführter Abschnitte ermöglicht es, dass ein Raum vorhanden ist, durch den ein Füllmaterial sicher in etwaige Luftspalte eindringen kann, so dass bei nachfolgender Verdichtung eine homogenere Füllung ohne Luftspalte erzielt werden kann.

Bei der fertig hergestellten Heizvorrichtung kann es durch Verdichten während des Herstellungsprozesses, insbesondere auf einem Passdorn, dazu kommen, dass die Abstandshalter in unmittelbarem oder nahezu unmittelbarem Kontakt zueinander stehen, so dass nicht geführte Abschnitte nur noch als eine Naht erkennbar sind.

Besonders vorteilhaft im Hinblick auf das Erzielen einer über den Umfang des zu beheizenden Bauteils hinweg besonders homogenen Wärmeverteilung ist es bei Verwendung mehrerer Abstandshalter, wenn die Abstandshalter äquidistant zueinander angeordnet sind.

Eine besonders einfache Möglichkeit zur Fixierung der Abstandshalter besteht darin, dass die Abstandshalter durch die mechanische Spannung des Heizleiters an der inneren Mantelfläche der elektrischen Heizvorrichtung fixiert sind. Die unter Zug vorgenommene Wicklung des Heizleiters führt zu einer einfachen und sicheren Fixierung der Baugruppe bestehend aus innerer Mantelfläche, Abstandshalter und Heizdrahtwicklung. Dies ist unter fertigungstechnischen Aspekten besonders wichtig, da dadurch die Fixierung dieser Bauelemente bis zu einer ergänzenden Fixierung durch Befüllen und Verdichten der Heizvorrichtung gewährleistet ist.

Eine besonders gute und einfach herzustellende Wärmeleitung über den gesamten Umfang des zu beheizenden Bauteils kann dadurch gewährleistet werden, dass im Bereich zwischen den Abstandshaltern der Raum zwischen dem inneren Metallmantel und dem äußeren Metallmantel ganz oder teilweise mit einem Material, insbesondere einem Pulver oder Granulat gefüllt ist. Ebenfalls kann zu einem solchen Effekt beitragen, wenn die elektrische Heizvorrichtung ganz oder teilweise verdichtet ist. In besonders bevorzugter Weise geschieht dies auf einem Kalibrierdorn oder Passdorn.

Besonders vorteilhaft ist es, wenn die Abstandshalter der verdichteten Heizvorrichtung in möglichst geringem Abstand voneinander angeordnet sind und insbesondere, wenn die Abstandshalter einander nach dem Verdichten berühren. Dadurch wird eine hohe Sicherheit gegen Spannungsdurchschläge vom Heizleiter auf die innere Mantelfläche erzielt.

Besonders gut geeignete Ausführungsformen hinsichtlich des Materials, aus dem das Pulver oder Granulat besteht, liegen vor, wenn das Pulver oder Granulat aus einem Metalloxid, insbesondere Magnesiumoxid, einem Quarzsand oder einer keramischen Masse ist.

Besonders günstig ist es, wenn die Abstandshalter aus einem elektrisch isolierenden Material sind. Die verwendeten Materialien sind vorteilhafterweise ferner, hitzebeständig und möglichst gut wärmeleitend, insbesondere kommen Keramiken, Mikanit, Polyimide und ähnliche Materialien in Frage. Insbesondere solche Keramiken, welche vorzugsweise noch teilporös oder porös und nicht dicht gesintert sind, sind besonders gut geeignet.

Wenn mindestens ein Abstandshalter mindestens eine Bohrung aufweist, ermöglicht diese eine isolierte Rückführung des Heizleiters oder wenigstens eines mit diesem in elektrischem Kontakt stehenden Leiters zum Anschluss. Wenn in mindestens einem der Abstandshalter eine Bohrung vorgesehen ist, in die mindestens ein Ende des Heizleiters aufgenommen ist, ermöglicht man, dass die Heizleiterwicklung nach dem Bewickeln auf Zug fixiert bleibt und nicht aufspringt. Besonders gut wird die Fixierung dann, wenn beide Enden des Heizleiters jeweils in eine Bohrung eingeführt sind. Eine besonders gute Art, einen elektrischen Kontakt zum Heizleiter herzustellen, besteht darin, zu diesem Zweck wenigstens einen Hilfsdraht, vorzugsweise mit gutem Leitwert und/oder größerem Querschnitt bereitzustellen, der mit dem in der Regel hochohmigen Heizleiter in innigen Kontakt gebracht ist. Dies ist insbesondere dadurch erzielbar, dass Heizleiter und Hilfsdraht miteinander verdrillt, verschweißt, verkrimpt oder presskontaktiert sind.

In einer vorteilhaften Ausgestaltung des Heizleiters weist dieser zwei Anschlussleiter auf, an denen eine Versorgungsspannung an den Heizleiter anlegbar ist. Alternativ kann eine Spannungsversorgung mit Schutzspannung gewährleistet werden, indem nur ein Anschlussleiter zum Anlegen der Versorgungsspannung vorgesehen wird und innere oder äußere Mantelfläche als Rückleiter verwendbar sind.

Besonders vorteilhaft ist es, ein Thermoelement an der elektrischen Heizvorrichtung vorzusehen. Es ist vorteilhaft, dieses in einer Bohrung des bzw. eines der Abstandshalter anzuordnen.

Besondere Flexibilität hinsichtlich erzielbarer Temperaturprofile ist gegeben, wenn mehr als ein Heizleiter vorgesehen werden. Hierdurch können einzelne Bereiche der Heizvorrichtung getrennt voneinander bestromt werden. Es ist auch möglich, mehrere Heizdrahtwicklungen vorzugsweise parallel miteinander zu verschalten.

Eine Ausführungsform, die eine besonders präzise Festlegung des Abstands des Heizleiters vom inneren oder äußeren Metallmantel erlaubt, kann realisiert werden, wenn die Oberfläche der Seite der Abstandshalter, die am inneren Metallmantel oder am äußeren Metallmantel anliegt, an die Kontur des inneren oder äußeren Metallmantels angepasst ist.

Eine besonders gute Sicherung gegen etwaige Spannungsdurchschläge ist in einer Ausführungsform gegeben, in der die zusammengesetzten Oberflächen der Seiten der Abstandshalter, die am inneren Metallmantel oder am äußeren Metallmantel anliegen, den inneren oder äußeren Metallmantels nahezu vollständig überdecken.

Die Erfindung wird im Folgenden anhand von Zeichnungen näher erläutert. Es zeigen:
- Fig.1:: Eine Darstellung eines ersten Ausführungsbeispiels einer elektrischen Heizvorrichtung mit entferntem äußeren Metallmantel und ohne Füllmaterial
- Fig.2:: Eine Querschnittsdarstellung des Ausführungsbeispiels aus Figur 1,
- Fig.3:: Eine Darstellung eines zweiten Ausführungsbeispiels einer elektrischen Heizvorrichtung mit entferntem äußeren Metallmantel und ohne Füllmaterial
- Fig.4:: Eine Querschnittsdarstellung des Ausführungsbeispiels aus Figur 3,
- Fig.5:: Eine Darstellung eines dritten Ausführungsbeispiels einer elektrischen s Heizvorrichtung mit entferntem äußeren Metallmantel und ohne Füllmaterial
- Fig.6:: Eine Querschnittsdarstellung des Ausführungsbeispiels aus Figur 5,
- Fig.7:: Eine Darstellung eines vierten Ausführungsbeispiels eines elektrischen Heizvorrichtung mit entferntem äußeren Metallmantel und ohne Füllmaterial
- Fig.8:: Eine Querschnittsdarstellung des Ausführungsbeispiels aus Figur 7,
- Fig.9:: Eine Explosionsdarstellung einer in eine Düse integrierten Variante der elektrischen Heizvorrichtung gemäß dem ersten Ausführungsbeispiel,
- Fig.10:: Eine Explosionsdarstellung einer Variante des dritten Ausführungsbeispiels der elektrischen Heizvorrichtung, und
- Fig.11:: Eine Detaildarstellung einer bevorzugten Kontaktierungsmöglichkeit für den Heizleiter.

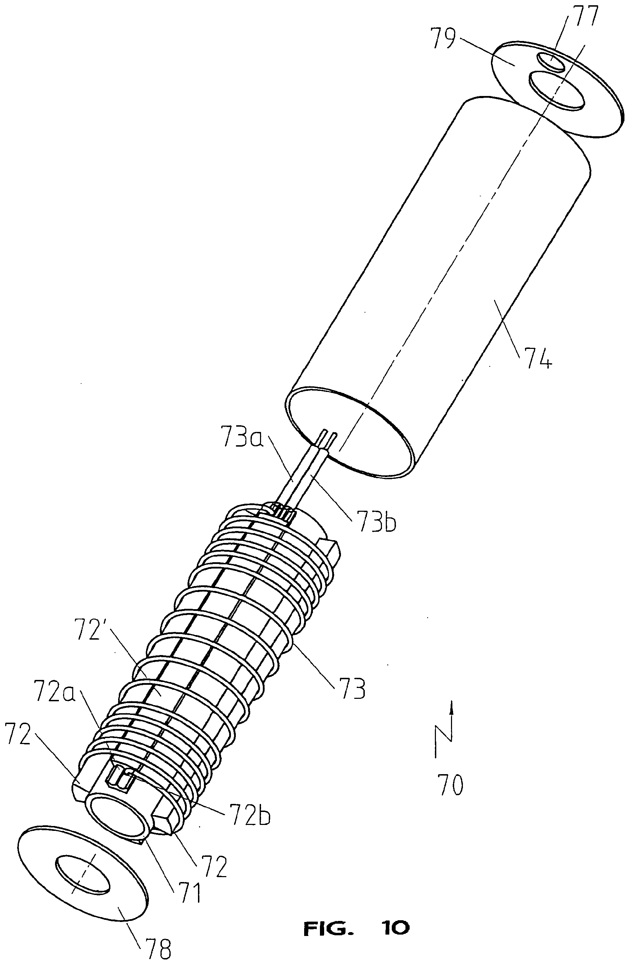

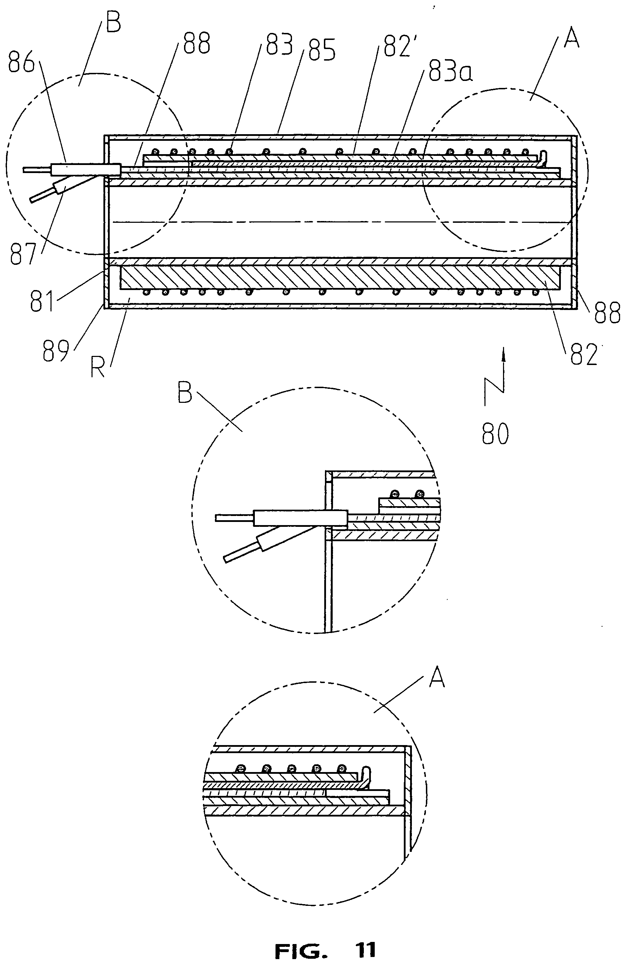

In allen Figuren werden identische Bezugszeichen für gleiche Bauelemente gleicher Ausführungsbeispiele verwendet. Auf die Darstellung der Anschlüsse der Heizleiter wurden außer in Figuren 10 und 11 stets verzichtet, um die Übersichtlichkeit der Darstellungen nicht zu gefährden.

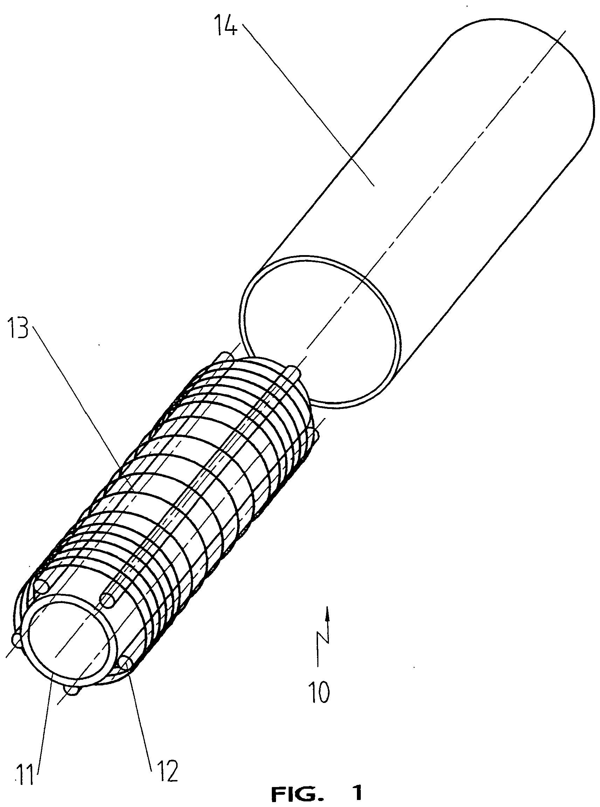

Figur 1 zeigt eine elektrische Heizvorrichtung 10 mit einem zylindrischen inneren Metallmantel 11, auf dem fünf zylindrisch ausgeführte Abstandshalter 12 derart angeordnet sind, dass zwischen jeweils zwei benachbarten Abstandshaltern 12 derselbe Abstand vorliegt, so dass es sich um eine äquidistante Anordnung von Abstandshaltern 12 handelt. Um die Abstandshalter 12 ist ein Heizleiter 13 spiralförmig gewendelt geführt, das unter einer Zugspannung steht, so dass ein radialer Druck auf die Abstandshalter 12 ausgeübt wird, der diese fixiert. Um den Aufbau zu verdeutlichen, ist der ebenfalls zylindrische und koaxial zum inneren Metallmantel 11 angeordnete äußere Metallmantel 14 nach Art einer Explosionsdarstellung zurückgezogen dargestellt und eine Füllung des nicht durch Abstandshalter 12 oder Heizleiter 13 ausgefüllten Raums mit einem hier elektrisch isolierend ausgeführten Material nicht dargestellt.

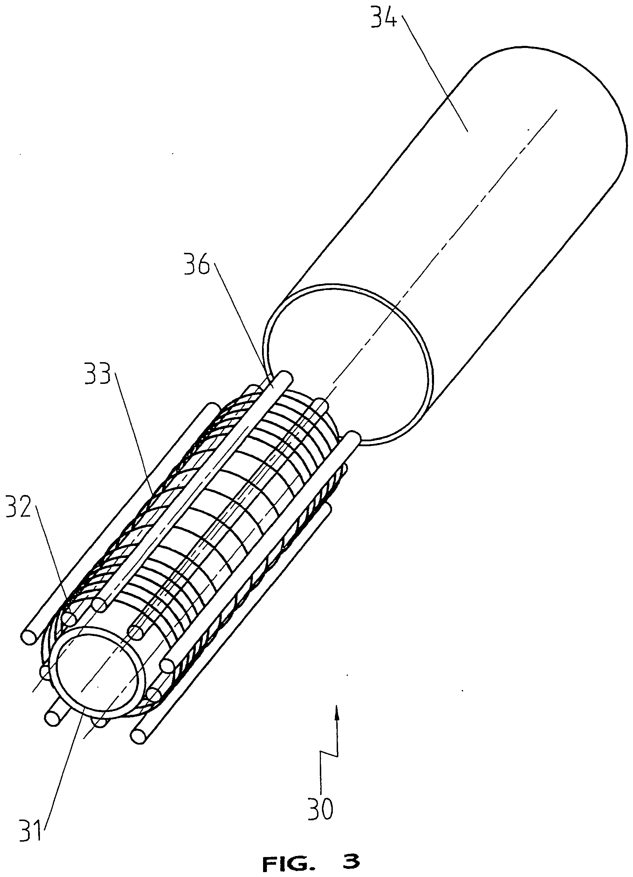

Ebenfalls nicht dargestellt ist, dass der Heizleiter 13 mit elektrischen Anschlüssen in Kontakt steht, die aus der Heizvorrichtung hinausgeführt sind. Dies gilt entprechend für die Figuren 3, 5 und 7.

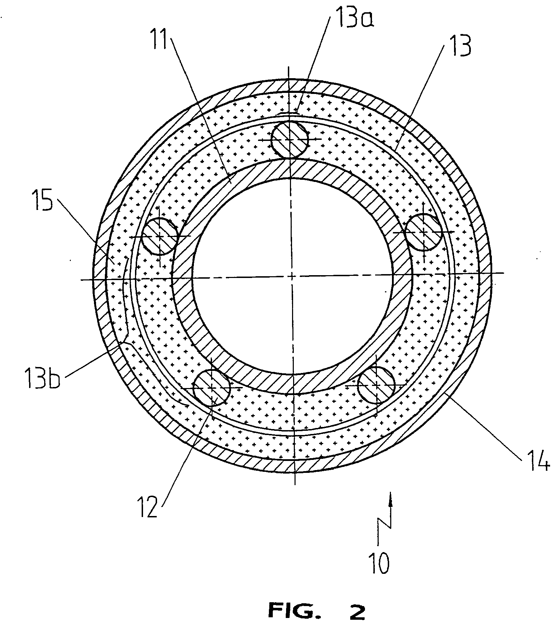

Figur 2 zeigt einen Querschnitt durch eine elektrische Heizvorrichtung 10 aus Figur 1 in zusammengesetztem Zustand. Man erkennt in dieser Darstellung außer dem inneren Metallmantel 11 und den darauf angeordneten fünf zylindrischen Abstandshaltern 12 eine einzelne Windung der Wendel des Heizleiters 13, wobei eine Steigung der Wendel, die dadurch bedingt ist, dass die Windung der Wendel eigentlich nicht exakt in derselben Ebene wie die dargestellte Schnittebene liegt, nicht dargestellt ist, um die Übersichtlichkeit der Darstellung nicht zu gefährden. Man erkennt in dieser Darstellung ferner, dass der Heizleiter 13 abwechselnd geführter Abschnitte 13a, in denen er auf den Abstandshaltern 12 geführt ist, und nicht geführte Abschnitte 13b aufweist, in denen er nicht auf den Abstandshaltern 12 geführt ist, so dass zwischen jeweils zwei geführten Abschnitten 13a ein ungeführter Abstand 13 b liegt. Ebenfalls zu sehen ist der äußere Metallmantel 14. In der Darstellung gemäß Figur 2 ist die Füllung des zwischen dem inneren Metallmantel 11 und dem äußeren Metallmantel 14 verbleibenden, aber in den Figuren wegen der Füllung nicht zu erkennenden, Raums durch das hier elektrisch isolierend ausgeführte Material 15 besonders gut zu erkennen.

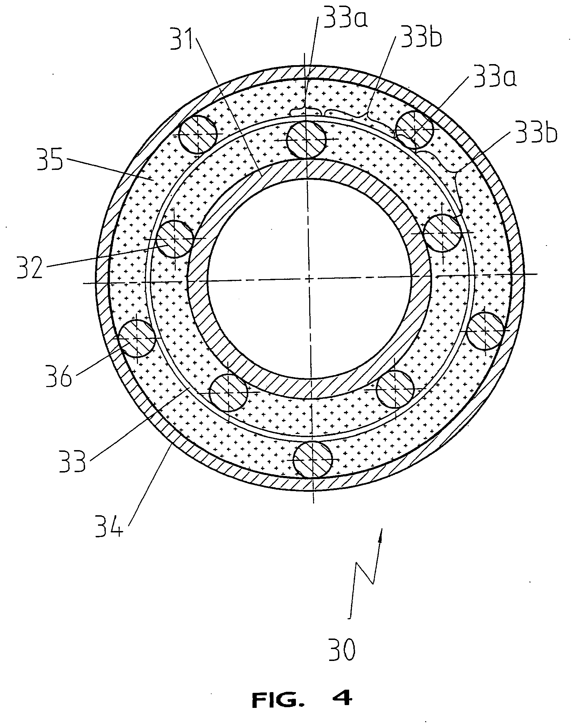

Figuren 3 und 4 zeigen eine zweite Ausführungsform einer elektrischen Heizvorrichtung 30. Diese Ausführungsform entspricht hinsichtlich der Anordnung von innerem Metallmantel 31 und äußerem Metallmantel 34, fünf zylindrischen Abstandshaltern 32, und Heizleiter 33 sowie des nur in Figur 4 dargestellten Füllmaterials 35 im Wesentlichen der in Figuren 1 und 2 dargestellten Ausführungsform. Sie unterscheidet sich von der in Figuren 1 und 2 vorgestellten Ausführungsform lediglich dadurch, dass fünf weitere Abstandshalter 36 vorgesehen sind, die zwischen dem Heizleiter 33 und dem äußeren Metallmantel 24 angeordnet sind. Besonders vorteilhaft bei dieser Anordnung ist insbesondere, dass dadurch besonders starke Andruckkräfte auf die jeweiligen Abstandshalter 32, 36 geleitet werden können, was einen geringen, gleichmäßigen Abstand der Abstandshalter 32,36 zur inneren Mantelfläche 21 sichert.

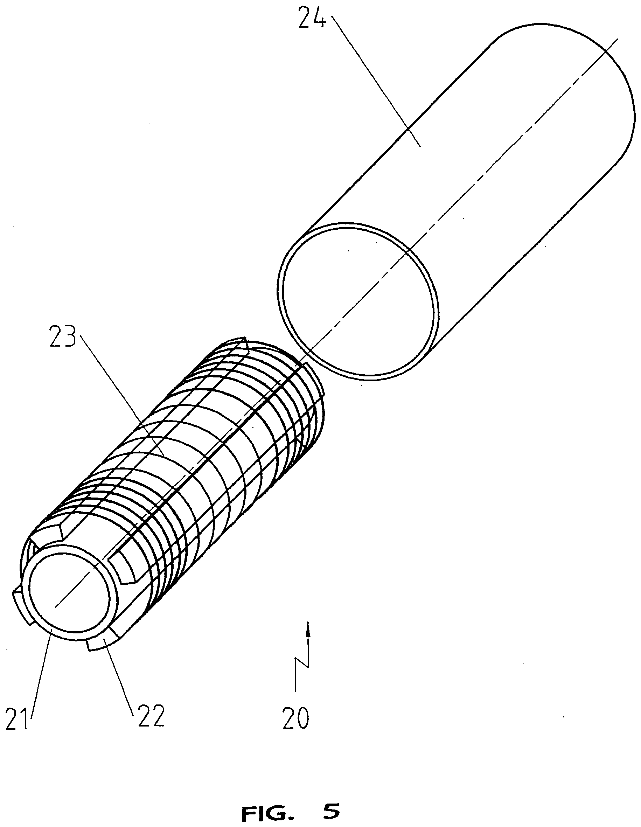

Figur 5 zeigt eine dritte Ausführungsform einer elektrische Heizvorrichtung 20 mit einem zylindrischen inneren Metallmantel 21, auf dem vier Abstandshalter 22 derart angeordnet sind, dass zwischen jeweils zwei benachbarten Abstandshaltern 22 derselbe Abstand vorliegt, so dass es sich um eine äquidistante Anordnung von Abstandshaltern 22 handelt. Die Abstandshalter 22 sind hier in der Form eines Segments einer Rohrwand ausgeführt, so dass eine in der Figur 5 nicht erkennbare Kontaktfläche zwischen Abstandshalter 22 und innerem Metallmantel 21 entsteht, die der Kontur des inneren Metallmantels 21 angepasst ist. Um die Abstandshalter 22 ist ein Heizleiter 23 spiralförmig gewendelt geführt, der unter einer Zugspannung steht, so dass ein radialer Druck auf die Abstandshalter 22 ausgeübt wird, der diese am inneren Metallmantel 21 fixiert. Um den Aufbau zu verdeutlichen, ist der ebenfalls zylindrische und koaxial zum inneren Metallmantel 21 angeordnete äußere Metallmantel 24 nach Art einer Explosionsdarstellung zurückgezogen dargestellt und eine Füllung des nicht durch Abstandshalter 22 oder Heizleiter 23 ausgefüllten Raums mit einem hier elektrisch isolierend ausgeführten Material nicht dargestellt.

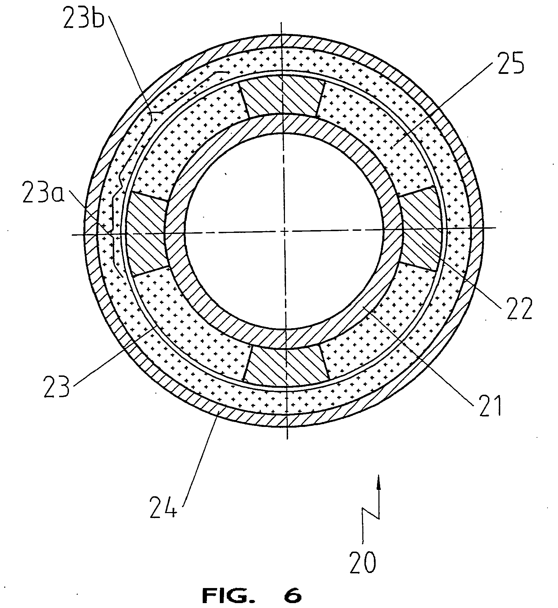

Figur 6 zeigt einen Querschnitt durch eine elektrische Heizvorrichtung 20 aus Figur 5 in zusammengesetztem Zustand. Man erkennt in dieser Darstellung außer dem inneren Metallmantel 21 und den darauf angeordneten vier rohrwandsegmentförmigen Abstandshaltern 22 eine einzelne Windung der Wendel des Heizleiters 23, wobei eine Steigung der Wendel, die dadurch bedingt ist, dass die Windung der Wendel eigentlich nicht exakt koplanar zur dargestellten Schnittebene liegt, nicht dargestellt ist, um die Übersichtlichkeit der Darstellung nicht zu gefährden. Man erkennt in dieser Darstellung ferner, dass der Heizleiter 23 abwechselnd geführter Abschnitte 23a, in denen er auf den Abstandshaltern 22 geführt ist, und nicht geführte Abschnitte 23b aufweist, in denen es nicht auf den Abstandshaltern 22 geführt ist, so dass zwischen jeweils zwei geführten Abschnitten 23a ein ungeführter Abstand 23b liegt. Zu sehen ist ferner der äußere Metallmantel 24. In der Darstellung gemäß Figur 6 ist die Füllung des zwischen dem inneren Metallmantel 21 und dem äußeren Metallmantel 24 verbleibenden, aber in den Figuren wegen der Füllung nicht zu erkennenden, Raums durch das hier elektrisch isolierend ausgeführte Material 25 besonders gut zu erkennen.

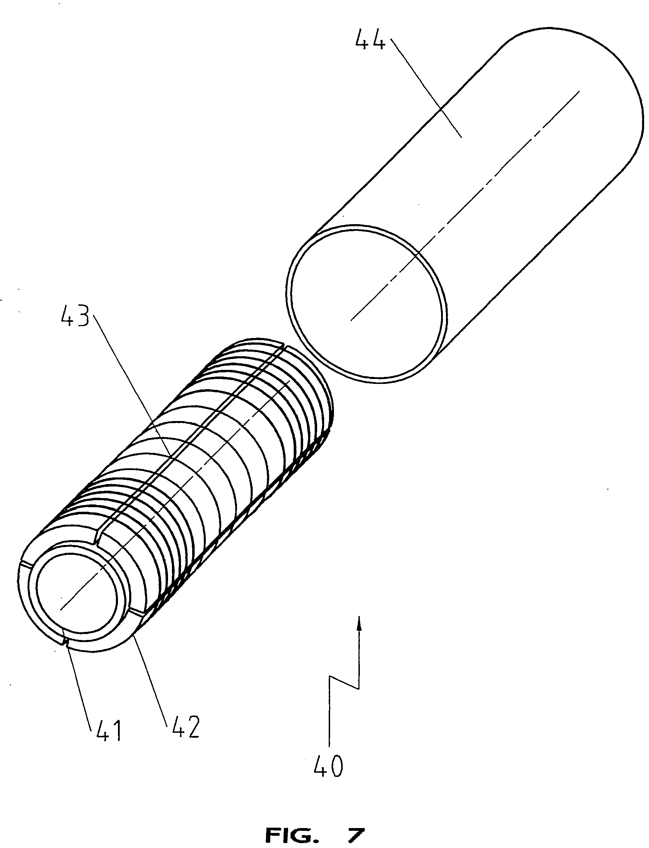

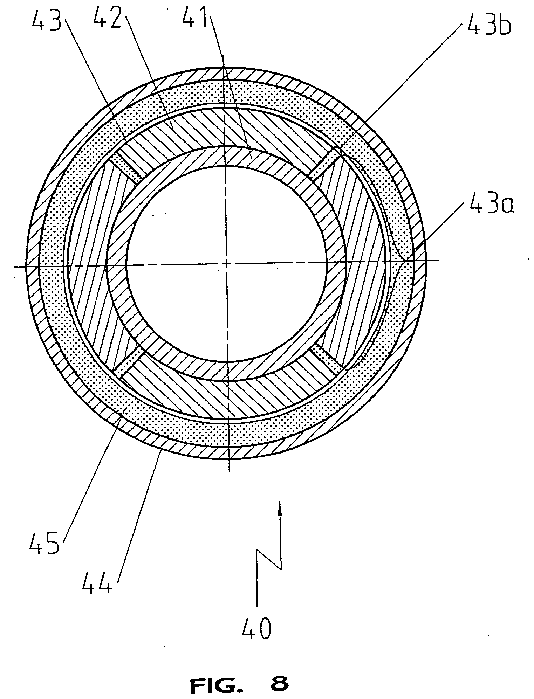

Figuren 7 und 8 zeigen eine vierte Ausführungsform einer elektrischen Heizvorrichtung 40. Diese Ausführungsform entspricht hinsichtlich der Anordnung von innerem Metallmantel 41 und äußerem Metallmantel 44, vier Abstandshaltern 42, und Heizleiter 43, sowie des nur in Figur 8 dargestellten Füllmaterials 45 im Wesentlichen der in Figuren 5 und 6 dargestellten Ausführungsform. Sie unterscheidet sich von dieser lediglich dadurch, dass die Form der Abstandshalter 42 hier so gewählt ist, dass der innere Metallmantel 41 nahezu vollständig abgedeckt ist. Dies bringt den Vorteil mit sich, dass das Risiko etwaiger elektrischer Durchschläge zwischen Heizleiter 43 und innerem Metallmantel 41 stark reduziert wird. Ideal ist es, wenn im durch das Heizleiter 43 angedrückten Zustand der Abstand zwischen zueinander benachbarten Abstandshaltern 42 möglichst klein, insbesondere kleiner als 1 mm ist oder bei einer verdichteten Heizvorrichtung einander berühren.

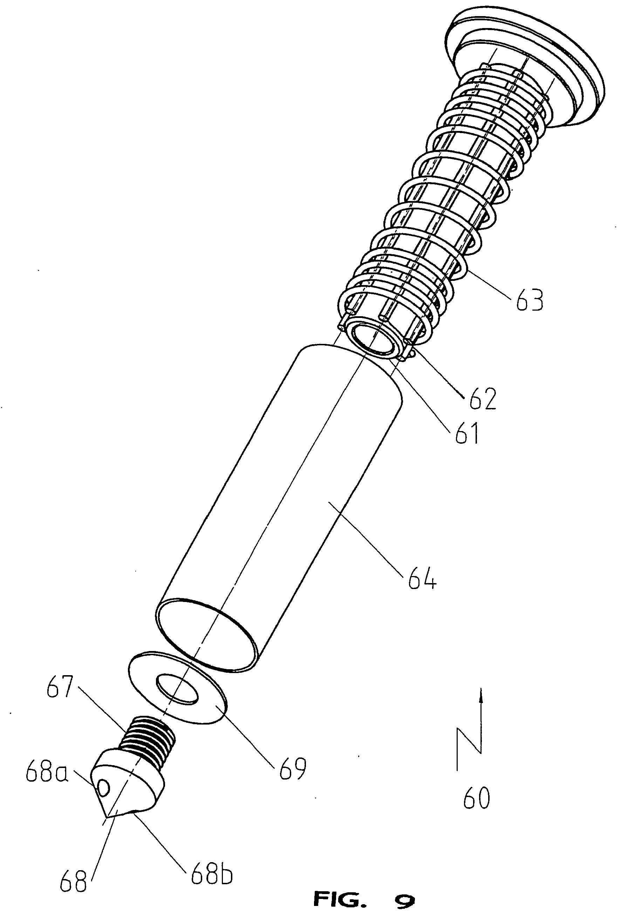

Fig.9 zeigt eine Explosionsdarstellung einer in eine Düse integrierten Variante der elektrischen Heizvorrichtung gemäß dem ersten Ausführungsbeispiel, wie sie z.B. für Geräte zum Spritzgießen Verwendung finden kann. Die innere Mantelfläche 61 der elektrischen Heizvorrichtung 60 wird durch den Düsenkörper gebildet, der von dem Kanal 66 für das zu spritzende Material durchsetzt wird. Den Abschluss des Kanals 66 bildet die vorzugsweise mittels des Gewindes 67 in den Kanal 66 einschraubbare Düsenkopf 68 mit Spritzöffnungen 68a und 68b, die mit dem Kanal 66 in Verbindung stehen.

Die Anordnung des Heizleiters 63 und der Abstandshalter 62 auf der inneren Mantelfläche 61 ist identisch zu der in der Beschreibung der Figuren 1 und 2 erläuterten Anordnung. Umgeben wird diese Anordnung von der äußeren Mantelfläche 64, die stirnseitig durch die Ringscheibe 69 abgeschlossen wird. Der Raum zwischen innerer Mantelfläche 61 und äußerer Mantelfläche 64 ist mit einem nicht dargestellten elektrisch isolierenden Pulver oder Granulat befüllt.

Fig.10 zeigt eine Explosionsdarstellung einer Variante der dritten Ausführungsbeispiels der elektrischen Heizvorrichtung. Die elektrische Heizvorrichtung 70 zeigt eine Anordnung von innerem Metallmantel 71 und äußerem Metallmantel 74, Abstandshaltern 72,72'und Heizleiter 73 die der oben anhand der Figuren 5 und 6 beschriebenen Ausgestaltung entspricht. Sie unterscheidet sich von der in Figuren 5 und 6 dargestellten Ausführungsform lediglich dadurch, dass ein Abstandshalter 72' zwei Bohrungen 76a,76b aufweist, die den Abstandshalter 72' längs seiner durch die Längsachse der zylindrisch ausgeführten Heizvorrichtung 70 vorgegebenen Erstreckungsrichtung durchsetzen. Die aus der Heizvorrichtung 70 herausgeführten Anschlüsse 73a, 73b stehen mit dem Heizleiter 73 in elektrischem Kontakt.

Außerdem sind in Figur 10 Ringscheiben 78,79 dargestellt, die einen stirn- bzw. endseitigen Abschluss zwischen innerem Metallmantel 71 und äußerem Metallmantel 74 bilden und einen mechanischen Schutz und Schutz gegen Eindringen von Medien bilden. Die anschlussseitige Abschlussscheibe 78 weist eine Durchführöffnung 77 für die Anschlüsse 73a,73b auf.

Fig.11 ist eine Detaildarstellung einer bevorzugten Kontaktierungsmöglichkeit für den Heizleiter. Man erkennt einen Querschnitt durch eine elektrische Heizvorrichtung 80 mit innerer Mantelfläche 81, konzentrisch die innere Mantelfläche 81 umgebender äußerer Mantelfläche 84, Ringscheiben 88 und 89, die die stirn- bzw. anschlussseitig die innere Mantelfläche 81 und die äußere Mantelfläche 84 miteinander verbinden und den zwischen diesen gebildeten Raum R, der vorzugsweise mit einem nicht dargestellten elektrisch isolierenden Pulver oder Granulat gefüllt ist, abschließen. An die der äußeren Mantelfläche 84 zugewandte Oberfläche der innere Mantelfläche 81 werden Abstandshalter 82,82'durch die mechanische Spannung eines spiralförmig gewendelten Heizleiters 83 angepresst.

Anschlüsse 86,87 sind durch eine Öffnung in der Ringscheibe 89 geführt und gehen in einen Hilfsdraht 88 aus einem Material mit hohem Leitwert über, der in eine Bohrung im Abstandshalter 82' eingeführt ist. Ebenfalls in dieser Bohrung ist ein Endabschnitt 83a des Heizleiters 83 geführt. Durch mechanische Spannung des Heizleiters 83, die auf den Abstandshalter 82' wirkt, wird ein inniger Kontakt zwischen dem Hilfsdraht 88 und dem Endabschnitt 83a des Heizleiters 83 sichergestellt. Der Buchstabe B zeigt eine Ausschnittvergrößerung des Einführbereich des Hilfsdrahts 88. Der Buchstabe A zeigt eine Ausschnittsvergrößerung des Bereichs, in dem der Heizleiter 83 die Bohrung verlässt und die Wendelung um die Abstandshalter 82, 82'herum beginnt.

### Bezugszeichenliste

- 10,20,30,40,60,70,80: elektrische Heizvorrichtung
- 11,21,31,41,61,71,81: innerer Metallmantel
- 12,22,32,36,42,62,72,72', 82,82': Abstandshalter
- 13,23,33,43,63,73,83: Heizleiter
- 13a,23a,33a,43a: geführter Abschnitt
- 13b,23b,33b,43b: nicht geführter Abschnitt
- 14,24,34,44,64,74,84: äußerer Metallmantel
- 15,25,35,45,: elektrisch isolierendes Material
- 66: Kanal
- 67: Gewinde
- 68: Düsenkopf
- 68a,b: Spritzöffnung
- 69,78,79,88,89: Ringscheibe
- 73a,b: Anschluss
- 76a,b: Bohrung
- 77: Durchführöffnung
- 83a: Endabschnitt
- 86,87: Anschluss
- 88: Hilfsdraht
- A,B: Ausschnittsvergrößerung

## Patentansprüche

1. Elektrische Heizvorrichtung (10,20,30,40,60,70,80), insbesondere zur Beheizung von Oberflächen von Bauteilen, mit einem inneren Metallmantel (11,21,31,41,61,71,81) und einem äußeren Metallmantel (14,24,34,44,64,74,84), die derart relativ zueinander angeordnet sind, dass zwischen dem inneren Metallmantel (11,21,31,41,61,71,81) und dem äußeren Metallmantel (14,24, 34,44,64,74,84) ein Raum vorhanden ist,
mit mindestens einem zumindest abschnittsweise im Raum zwischen innerem Metallmantel (11,21,31,41,61,71, 81) und äußerem Metallmantel (14,24,34,44,64,74,84) angeordneten Heizleiter (13,23,33,43,63,73, 83), wobei mindestens zwei zwischen dem Heizleiter (13,23, 33,43,63,73,83)und dem inneren Metallmantel (11,21,31,41,61,71,81) angeordnete Abstandshalter (12,22,32,36,42,62,72,72',82,82'), vorgesehen sind,
**dadurch gekennzeichnet, dass** die Abschnitte des Heizleiters (13,23,33,43,63,73,83) über mindestens zwei Abstandshalter (12,22,32,36,42,62,72,62,82) geführt sind,
dass jeweils zwischen zwei geführten Abschnitten (13a, 23a,33a,43a) des Heizleiters (13,23,33,43,63,73, 83) ein nicht geführter Abschnitt (13b,23b,33b,43b) des Heizleiters (13,23,33,43,63,73,83) vorhanden ist, in dem der Heizleiter (13,23,33,43,63,73,83) nicht über einen der Abstandshalter (12,22,32,36,42,62,72,72',82,82') geführt ist, und
dass im Bereich zwischen den Abstandshaltern (12,22,32,36,42,62,72,72',82,82') der Raum zwischen dem inneren Metallmantel (11,21,31,41, 61,71,81) und dem äußeren Metallmantel (14,24,34,44, 64,74,84) ganz oder teilweise mit einem Material, insbesondere mit einem Pulver oder Granulat (15,25,35,45) gefüllt ist.

2. Elektrische Heizvorrichtung (10,20,30,40,60, 70,80) nach Anspruch 1,
**dadurch gekennzeichnet, dass**
die Abstandshalter (12,22,32,36,42,62,72,72',82,82') äquidistant zueinander angeordnet sind.

3. Elektrische Heizvorrichtung (10,20,30, 40,50,60,70,80) nach einem vorstehenden Anspruch,
**dadurch gekennzeichnet, dass**
die Abstandshalter (12,22,32,36,42,62,72,72',82,82') durch die mechanische Spannung des Heizleiters (13,23,33,43,63,73,83) auf der inneren Mantelfläche (11,21,31,41,61,71,81) der elektrischen Heizvorrichtung (10,20,30,40,60,70,80) fixiert sind.

4. Elektrische Heizvorrichtung (10,20,30, 40,60,70,80) nach einem vorstehenden Anspruch,
**dadurch gekennzeichnet, dass**
die elektrische Heizvorrichtung (10,20,30, 40,60,70,80) ganz oder teilweise, insbesondere auf einem Kalibrierdorn verdichtet ist.

5. Elektrische Heizvorrichtung (10,20,30,40,60,70,80) nach Anspruch 4,
**dadurch gekennzeichnet, dass**
die Abstandshalter (12,22,32,36,42,62,72,72',82,82') der verdichteten Heizvorrichtung einander berühren.

6. Elektrische Heizvorrichtung (10,20,30, 40,60,70,80) nach Anspruch 4 oder 5,
**dadurch gekennzeichnet, dass**
das Pulver oder Granulat (15,25,35,45) ein Metalloxid, insbesondere Magnesiumoxid, ein Quarzsand oder eine keramischen Masse ist.

7. Elektrische Heizvorrichtung (10,20,30, 40,60,70,80) nach einem der vorstehenden Ansprüche,
**dadurch gekennzeichnet, dass**
die Abstandshalter (12,22,32,36,42,62,72,72',82,82') aus einem elektrisch isolierenden Material sind.

8. Elektrische Heizvorrichtung (10,20,30, 40,60,70,80) nach einem der vorstehenden Ansprüche,
**dadurch gekennzeichnet, dass**
mindestens ein Abstandshalter (12,22,32,
36,42,62,72,72',82,82') mindestens eine Bohrung aufweist, durch die wenigstens ein Anschluss, der mit dem Heizleiter (13,23,33,43) in elektrischem Kontakt steht, aus der elektrischen Heizvorrichtung (10,20,30,40,60,70,80) heraus geführt ist.

9. Elektrische Heizvorrichtung (10,20,30,40,60,70,80) nach einem der vorstehenden Ansprüche,
**dadurch gekennzeichnet, dass**
mindestens ein Abstandshalter (12,22,32,36,42,62,72,72',82,82') mindestens eine Bohrung aufweist, in die wenigstens ein Ende des Heizleiters aufgenommen ist.

10. Elektrische Heizvorrichtung (10,20,30,40,60,70,80) nach einem der vorstehenden Ansprüche,
**dadurch gekennzeichnet, dass**
zur Kontaktierung des Heizleiters (13,23,33,43,63, 73,83) wenigstens ein Hilfsdraht (88) vorgesehen ist, mit dem der Heizleiter (13,23,33,43,63,73,83) in innigen Kontakt gebracht ist, insbesondere verdrillt,verschweisst, verkrimpt oder presskontaktiert ist.

11. Elektrische Heizvorrichtung (10,20,30,40,60,70,80) nach einem der vorstehenden Ansprüche,
**dadurch gekennzeichnet, dass** der Heizleiter (13,23,33,43,63,73,83) zwei Anschlüsse (73a,73b) aufweist, an denen eine Versorgungsspannung an den Heizleiter (13,23,33,43,63,73,83) anlegbar ist.

12. Elektrische Heizvorrichtung (10,20,30,40,60,70,80) nach einem der Ansprüche 1 bis 11,
**dadurch gekennzeichnet, dass**
der Heizleiter (13,23,33,43,63,73,83) nur einen Anschlussleiter aufweist, an dem eine Schutzspannung als Versorgungsspannung anlegbar ist, und dass die innere Mantelfläche (11,21,31, 41,61,71,81) oder die äußere Mantelfläche (14,24,34, 44,64,74,84) als Rückleiter verwendbar ist.

13. Elektrische Heizvorrichtung (10,20,30,40,60,70,80) nach einem der vorstehenden Ansprüche,
**dadurch gekennzeichnet, dass**
die elektrische Heizvorrichtung (10,20,30,40,60,70,80) ein Thermoelement aufweist.

14. Elektrische Heizvorrichtung (10,20,30,40,60,70,80) nach Anspruch 13,
**dadurch gekennzeichnet, dass**
das das Thermoelement in einer Bohrung in einem der Abstandshalter (12,22,32, 36,42,62,72,72',82,82')geführt ist.

15. Elektrische Heizvorrichtung (10,20,30,40,60,70,80) nach einem der vorstehenden Ansprüche,
**dadurch gekennzeichnet, dass**
mehr als ein Heizleiter (13,23,33,43,63,73,83) vorgesehen ist.

16. Elektrische Heizvorrichtung (10,20,30,40,60,70,80) nach einem der vorstehenden Ansprüche,
**dadurch gekennzeichnet, dass**
die Oberfläche der Seite der Abstandshalter (12,22,32,36, 42,62,72,72',82,82'), die am inneren Metallmantel (11,21,31,41,61,71,81) anliegt, an die Kontur des inneren Metallmantels (11,21,31,41,61,71,81) angepasst ist.

17. Elektrische Heizvorrichtung (10,20,30,40,60,70,80) nach Anspruch 16,
**dadurch gekennzeichnet, dass**
die zusammengesetzten Oberflächen der Seiten der Abstandshalter (12,22,32,36,42,62,72, 72',82,82'), die am inneren Metallmantel (11,21,31,41,61,71,81) anliegen, den inneren Metallmantel (11,21,31,41,61,71,81) nahezu vollständig überdecken.

## Claims

1. Electrical heating device (10, 20, 30, 40, 60, 70, 80), in particular for heating surfaces of components, having
an inner metal casing (11, 21, 31, 41, 61, 71, 81) and an outer metal casing (14, 24, 34, 44, 64, 74, 84) which are arranged relative to each other in such a way that a space is present between the inner metal casing (11, 21, 31, 41, 61, 71, 81) and the outer metal casing (14, 24, 34, 44, 64, 74, 84),
having at least one heat conductor (13, 23, 33, 43, 63, 73, 83) which is arranged at least in sections in the space between the inner metal casing (11, 21, 31, 41, 61, 71, 81) and the outer metal casing (14, 24, 34, 44, 64, 74, 84), wherein at least two spacers (12, 22, 32, 36, 42, 62, 72, 72', 82, 82') are provided which are arranged between the heat conductor (13, 23, 33, 43, 63, 73, 83) and the inner metal casing (11, 21, 31, 41, 61, 71, 81),
**characterised in that**
the sections of the heat conductor (13, 23, 33, 43, 63, 73, 83) are guided by at least two spacers (12, 22, 32, 36, 42, 62, 72, 62, 82),
a non-guided section (13b, 23b, 33b, 43b) of the heat conductor (13, 23, 33, 43, 63, 73, 83) is present in each case between two guided sections (13a, 23a, 33a, 43a) of the heat conductor (13, 23, 33, 43, 63, 73, 83), in which non-guided section the heat conductor (13, 23, 33, 43, 63, 73, 83) is not guided by one of the spacers (12, 22, 32, 36, 42, 62, 72, 72', 82, 82'), and
in the region between the spacers (12, 22, 32, 36, 42, 62, 72, 72', 82, 82'), the space between the inner metal casing (11, 21, 31, 41, 61, 71, 81) and the outer metal casing (14, 24, 34, 44, 64, 74, 84) is fully or partially filled with a material, in particular a powder or granulate (15, 25, 35, 45).

2. Electrical heating device (10, 20, 30, 40, 60, 70, 80) according to claim 1,
**characterised in that**
the spacers (12, 22, 32, 36, 42, 62, 72, 72', 82, 82') are arranged to be equidistant from one another.

3. Electrical heating device (10, 20, 30, 40, 50, 60, 70, 80) according to a preceding claim,
**characterised in that**
the spacers (12, 22, 32, 36, 42, 62, 72, 72', 82, 82') are fixed on the inner casing surface (11, 21, 31, 41, 61, 71, 81) of the electrical heating device (10, 20, 30, 40, 60, 70, 80) by mechanical tension of the heat conductor (13, 23, 33, 43, 63, 73, 83).

4. Electrical heating device (10, 20, 30, 40, 60, 70, 80) according to a preceding claim,
**characterised in that**
the electrical heating device (10, 20, 30, 40, 60, 70, 80) is fully or partially compressed, in particular on a calibrating mandrel.

5. Electrical heating device (10, 20, 30, 40, 60, 70, 80) according to claim 4,
**characterised in that**
the spacers (12, 22, 32, 36, 42, 62, 72, 72', 82, 82') of the compressed heating device are in contact with one another.

6. Electrical heating device (10, 20, 30, 40, 60, 70, 80) according to claim 4 or 5,
**characterised in that**
the powder or granulate (15, 25, 35, 45) is a metal oxide, in particular magnesium oxide, a quartz sand or a ceramic mass.

7. Electrical heating device (10, 20, 30, 40, 60, 70, 80) according to one of the preceding claims,
**characterised in that**
the spacers (12, 22, 32, 36, 42, 62, 72, 72', 82, 82') are made from an electrically insulating material.

8. Electrical heating device (10, 20, 30, 40, 60, 70, 80) according to one of the preceding claims,
**characterised in that**
at least one spacer (12, 22, 32, 36, 42, 62, 72, 72', 82, 82') has at least one bore hole, through which at least one connector, which is in electrical contact with the heat conductor (13, 23, 33, 43), is guided out from the electrical heating device (10, 20, 30, 40, 60, 70, 80).

9. Electrical heating device (10, 20, 30, 40, 60, 70, 80) according to one of the preceding claims,
**characterised in that**
at least one spacer (12, 22, 32, 36, 42, 62, 72, 72', 82, 82') has at least one bore hole, in which at least one end of the heat conductor is received.

10. Electrical heating device (10, 20, 30, 40, 60, 70, 80) according to one of the preceding claims,
**characterised in that**
at least one auxiliary wire (88) is provided for contacting the heat conductor (13, 23, 33, 43, 63, 73, 83), with which auxiliary wire the heat conductor (13, 23, 33, 43, 63, 73, 83) is brought into close contact, in particular twisted, welded, crimped or pressure contacted.

11. Electrical heating device (10, 20, 30, 40, 60, 70, 80) according to one of the preceding claims,
**characterised in that**
the heat conductor (13, 23, 33, 43, 63, 73, 83) has two connectors (73a, 73b) on which a supply voltage can be applied to the heat conductor (13, 23, 33, 43, 63, 73, 83).

12. Electrical heating device (10, 20, 30, 40, 60, 70, 80) according to one of claims 1 to 11,
**characterised in that**
the heat conductor (13, 23, 33, 43, 63, 73, 83) only has one connection conductor on which a protective voltage can be applied as a supply voltage, and the inner casing surface (11, 21, 31, 41, 61, 71, 81) or the outer casing surface (14, 24, 34, 44, 64, 74, 84) can be used as a return conductor.

13. Electrical heating device (10, 20, 30, 40, 60, 70, 80) according to one of the preceding claims,
**characterised in that**
the electrical heating device (10, 20, 30, 40, 60, 70, 80) has a thermocouple.

14. Electrical heating device (10, 20, 30, 40, 60, 70, 80) according to claim 13,
**characterised in that**
the thermocouple is guided in a bore hole in one of the spacers (12, 22, 32, 36, 42, 62, 72, 72', 82, 82').

15. Electrical heating device (10, 20, 30, 40, 60, 70, 80) according to one of the preceding claims,
**characterised in that**
more than one heat conductor (13, 23, 33, 43, 63, 73, 83) is provided.

16. Electrical heating device (10, 20, 30, 40, 60, 70, 80) according to one of the preceding claims,
**characterised in that**
the surface of the side of the spacers (12, 22, 32, 36, 42, 62, 72, 72', 82, 82'), which abuts on the inner metal casing (11, 21, 31, 41, 61, 71, 81), is tailored to the shape of the inner metal casing (11, 21, 31, 41, 61, 71, 81).

17. Electrical heating device (10, 20, 30, 40, 60, 70, 80) according to claim 16,
**characterised in that**
the assembled surfaces of the sides of the spacers (12, 22, 32, 36, 42, 62, 72, 72', 82, 82'), which abut on the inner metal casing (11, 21, 31, 41, 61, 71, 81), almost completely cover the inner metal casing (11, 21, 31, 41, 61, 71, 81).

## Revendications

1. Dispositif de chauffage électrique (10, 20, 30, 40, 60, 70, 80), en particulier pour le chauffage de surfaces d'éléments de construction comportant une enveloppe métallique interne (11, 21, 31, 41, 61, 71, 81) et une enveloppe métallique externe (14, 24, 34, 44, 64, 74, 84) qui sont montées l'une par rapport à l'autre de sorte qu'un espace soit présent entre l'enveloppe métallique interne (11, 21, 31, 41, 61, 71, 81) et l'enveloppe métallique externe (14, 24, 34, 44, 64, 74, 84),
au moins un conducteur chauffant (13, 23, 33, 43, 63, 73, 83) monté au moins par segments dans l'espace situé entre l'enveloppe métallique interne (11, 21, 31, 41, 61, 71, 81) et l'enveloppe métallique externe (14, 24, 34, 44, 64, 74, 84), au moins deux écarteurs (12, 22, 32, 36, 42, 62, 72, 72', 82, 82') étant montés entre le conducteur chauffant (13, 23, 33, 43, 63, 73, 83) et l'enveloppe métallique interne (11, 21, 31, 41, 61, 71, 81),
**caractérisé en ce que**
les segments du conducteur chauffant (13, 23, 33, 43, 63, 73, 83) sont guidés par au moins deux écarteurs (12, 22, 32, 36, 42, 62, 72, 82), entre deux segments guidés (13a, 23a, 33a, 43a) du conducteur chauffant (13, 23, 33, 43, 63, 73, 83), est respectivement prévu un segment non guidé (13b, 23b, 33b, 43b) de ce conducteur chauffant (13, 23, 33, 43, 63, 73, 83) dans lequel il n'est pas guidé par l'un des écarteurs (12, 22, 32, 36, 42, 62, 72, 72', 82, 82'), et
dans la zone située entre les écarteurs (12, 22, 32, 36, 42, 62, 72, 72', 82, 82'), l'espace situé entre l'enveloppe métallique interne (11, 21, 31, 41, 61, 71, 81) et l'enveloppe métallique externe (14, 24, 34, 44, 64, 74, 84) est rempli partiellement ou en totalité d'un matériau, en particulier d'une poudre ou d'un granulé (15, 25, 35, 45).

2. Dispositif de chauffage électrique (10, 20, 30, 40, 60, 70, 80) conforme à la revendication 1,
**caractérisé en ce que**
les écarteurs (12, 22, 32, 36, 42, 62, 72, 72', 82, 82') sont équidistants.

3. Dispositif de chauffage électrique (10, 20, 30, 40, 60, 70, 80) conforme à l'une des revendications précédentes,
**caractérisé en ce que**
les écarteurs (12, 22, 32, 36, 42, 62, 72, 72', 82, 82') sont fixés par la tension mécanique du conducteur chauffant (13, 23, 33, 43, 63, 73, 83) sur la surface enveloppe interne (11, 21, 31, 41, 61, 71, 81) du dispositif de chauffage électrique (10, 20, 30, 40, 60, 70, 80).

4. Dispositif de chauffage électrique (10, 20, 30, 40, 60, 70, 80) conforme à l'une des revendications précédentes,
**caractérisé en ce que**
le dispositif de chauffage électrique (10, 20, 30, 40, 60, 70, 80) est partiellement ou totalement comprimé, en particulier sur un mandrin de calibrage.

5. Dispositif de chauffage électrique (10, 20, 30, 40, 60, 70, 80) conforme à la revendication 4,
**caractérisé en ce que**
les écarteurs (12, 22, 32, 36, 42, 62, 72, 72', 82, 82') du dispositif de chauffage comprimé viennent en contact les uns avec les autres.

6. Dispositif de chauffage électrique (10, 20, 30, 40, 60, 70, 80) conforme à la revendication 4 ou 5,
**caractérisé en ce que**
la poudre ou le granulé (15, 25, 35, 45) est un oxyde métallique, en particulier de l'oxyde de magnésium, un sable de quartz ou une masse céramique.

7. Dispositif de chauffage électrique (10, 20, 30, 40, 60, 70, 80) conforme à l'une des revendications précédentes,
**caractérisé en ce que**
les écarteurs (12, 22, 32, 36, 42, 62, 72, 72', 82, 82') sont réalisés en un matériau électriquement isolant.

8. Dispositif de chauffage électrique (10, 20, 30, 40, 60, 70, 80) conforme à l'une des revendications précédentes,
**caractérisé en ce qu'**
au moins un écarteur (12, 22, 32, 36, 42, 62, 72, 72', 82, 82') comprend au moins un perçage au travers duquel au moins une borne de connexion qui est en contact électrique avec le conducteur chauffant (13, 23, 33, 43) sort du dispositif de chauffage électrique (10, 20, 30, 40, 60, 70, 80).

9. Dispositif de chauffage électrique (10, 20, 30, 40, 60, 70, 80) conforme à l'une des revendications précédentes,
**caractérisé en ce qu'**
au moins un écarteur (12, 22, 32, 36, 42, 62, 72, 72', 82, 82') comporte au moins un perçage dans lequel est logée au moins une extrémité du conducteur chauffant.

10. Dispositif de chauffage électrique (10, 20, 30, 40, 60, 70, 80) conforme à l'une des revendications précédentes,
**caractérisé en ce que**
pour permettre la mise en contact du conducteur chauffant (13, 23, 33, 43, 63, 73, 83), il est prévu au moins un fil auxiliaire (88) avec lequel le conducteur chauffant (13, 23, 33, 43, 63, 73, 83) est mis en contact étroit, en particulier torsadé, soudé, rétracté ou mis en contact par compression.

11. Dispositif de chauffage électrique (10, 20, 30, 40, 60, 70, 80) conforme à l'une des revendications précédentes,
**caractérisé en ce que**
le conducteur chauffant (13, 23, 33, 43, 63, 73, 83) comporte deux bornes de connexion (73a, 73b) par lesquelles une tension d'alimentation peut être appliquée sur ce conducteur chauffant (13, 23, 33, 43, 63, 73, 83).

12. Dispositif de chauffage électrique (10, 20, 30, 40, 60, 70, 80) conforme à l'une des revendications 1 à 11,
**caractérisé en ce que**
le conducteur chauffant (13, 23, 33, 43, 63, 73, 83) ne comporte qu'un seul conducteur de connexion sur lequel peut être appliquée une tension de protection sous la forme d'une tension d'alimentation, et la surface enveloppe interne (11, 21, 31, 41, 61, 71, 81) ou la surface enveloppe externe (14, 24, 34, 44, 64, 74, 84) peut être utilisée en tant que conducteur de retour.

13. Dispositif de chauffage électrique (10, 20, 30, 40, 60, 70, 80) conforme à l'une des revendications précédentes,
**caractérisé en ce que**
le dispositif de chauffage électrique (10, 20, 30, 40, 60, 70, 80) comprend un thermo-élément.

14. Dispositif de chauffage électrique (10, 20, 30, 40, 60, 70, 80) conforme à la revendication 13,
**caractérisé en ce que**
le thermo-élément passe dans un perçage de l'un des écarteurs (12, 22, 32, 36, 42, 62, 72, 72', 82, 82').

15. Dispositif de chauffage électrique (10, 20, 30, 40, 60, 70, 80) conforme à l'une des revendications précédentes,
**caractérisé en ce qu'**
il est prévu plus d'un conducteur chauffant (13, 23, 33, 43, 63, 73, 83).

16. Dispositif de chauffage électrique (10, 20, 30, 40, 60, 70, 80) conforme à l'une des revendications précédentes,
**caractérisé en ce que**
la surface du côté des écarteurs (12, 22, 32, 36, 42, 62, 72, 72', 82, 82') qui s'applique sur l'enveloppe métallique interne (11, 21, 31, 41, 61, 71, 81) est adaptée au contour de l'enveloppe métallique interne (11, 21, 31, 41, 61, 71, 81).

17. Dispositif de chauffage électrique (10, 20, 30, 40, 60, 70, 80) conforme à la revendication 16,
**caractérisé en ce que**
les surfaces assemblées des côtés des écarteurs (12, 22, 32, 36, 42, 62, 72, 72', 82, 82') qui s'appliquent sur l'enveloppe métallique interne (11, 21, 31, 41, 61, 71, 81) recouvert à peu près totalement l'enveloppe métallique interne (11, 21, 31, 41, 61, 71, 81).
